# EUROPÄISCHE PATENTSCHRIFT

(11) **EP 0 762 927 B1**
(45) Veröffentlichungstag und Bekanntmachung des Hinweises auf die Patenterteilung: **16.08.2001**
(21) Anmeldenummer: 95919332.7
(22) Anmeldetag: 23.05.1995
(51) Int. Cl.: B01D 61/48

(54) **EINFACH- UND MEHRFACHELEKTROLYSEZELLEN SOWIE ANORDNUNGEN DAVON ZUR ENTIONISIERUNG VON WÄSSRIGEN MEDIEN**
SINGLE AND MULTIPLE ELECTROLYTIC CELLS AND ARRAYS OF SUCH CELLS FOR DEIONIZING AQUEOUS SOLUTIONS
CELLULES ELECTROLYTIQUES SIMPLES ET MULTIPLES ET GROUPEMENTS DE TELLES CELLULES DESTINES A LA DESIONISATION DE MILIEUX AQUEUX

(30) Priorität: 30.05.1994 DE 4418812
(43) Veröffentlichungstag der Anmeldung: 19.03.1997
(73) Patentinhaber: FORSCHUNGSZENTRUM JÜLICH GMBH, 52425 Jülich (DE)
(72) Erfinder: NEUMEISTER, Herbert, D-52428 Jülich (DE); FÜRST, Leander, D-52428 Jülich (DE); FLUCHT, Reinhold, D-52428 Jülich (DE)
(86) Internationale Anmeldenummer: DE9500696
(87) Internationale Veröffentlichungsnummer: WO9532791

(56) Entgegenhaltungen:
- WO-A-90/15659
- DE-C- 967 953
- FR-A- 2 397 861
- US-A- 2 788 319

## Beschreibung

Die Erfindung bezieht sich auf eine elektrochemische Zelle gemäß den Merkmalen des Oberbegriffs von Anspruch 1, auf Mehrfachelektrolysezellen sowie auf Anordnungen von Einfach- und Mehrfachelektrolysezellen.

Für die Entionisierung von wäßrigen Lösungen, insbesondere bei der Herstellung von Reinstwasser, sind heute Elektrodialysezellen mit Mischbett-Technik in Gebrauch. Dabei ist eine Elektrodialyseeinheit gemäß der europäischen Patentanmeldung 0 170 895 so konzipiert, daß zwischen Kathode und Anode Kanäle ausgebildet sind, die voneinander durch kationen- und anionenpermeable Membranen getrennt sind. Die jeweils an den beiden seitlichen Enden der Zelle angeordneten Elektrodenräume sind als Soleräume ausgebildet, die einen Solestrom führen. Auf beide Solekanäle folgt zum Inneren der Zelle hin jeweils ein mit Ionenaustauscher gefüllter Raum, die ein Mischbett aus sowohl Anionen- als auch Kationenaustauscherharz enthalten. Beide Harzkanäle werden wiederum durch einen in der Mitte der Elektrodialyseeinheit angeordneten Solekanal voneinander getrennt (vgl. auch GIT Fachz. Lab. 3/94, S. 190-198). Eine solche Elektrodialysezelle läßt sich erweitern, indem zwischen den als Soleräumen ausgebildeten Elektrodenräumen weitere Harz- und Solekanäle in alternierender Folge zwischengeschaltet werden.

Derartige, mit Mischharzen gefüllte Elektrodialysezellen haben jedoch den Nachteil, daß eine elektrochemische Regeneration des Ionenaustauscherbettes nur gewährleistet ist, wenn Wasser in Protonen und Hydroxylionen dissoziiert.

Die DE-PS 967 953 offenbart ein Verfahren zum diskontinuierlichen Entsalzen von Lösungen in einer selektive Membranen aufweisenden Elektrodialysezelle, mit denen Reinheiten und eine Restkonzentration von 0,0086 mol/l NaCl erreicht werden.

Es ist Aufgabe der Erfindung, eine elektrochemische Zelle zu schaffen, die durch das angelegte elektrische Feld und den angelegten elektrischen Strom direkt kontrolliert und geregelt werden kann. Weiterhin ist es Aufgabe der Erfindung, Mehrfachelektrolysezellen sowie Anordnungen von Einfach- und Mehrfachelektrolysezellen zu schaffen.

Die der Erfindung zugrundeliegende Aufgabe wird dadurch gelöst, daß die Elektrodenräume mit Ionenaustauschermaterial gefüllt sind, und zwar der Kathodenraum mit Anionenaustauscher und der Anodenraum mit Kationenaustauscher, und daß sich die Elektroden in direktem Kontakt mit den Anionen- bzw. Kationenaustauscherharzbetten befinden, und daß weiterhin der Soleraum unmittelbar an die Elektrodenräume angrenzt. Dies hat zur Folge, daß die zur Regeneration der Harzbetten nötigen H⁺-bzw. OH⁻-Ionen direkt im Harzbett erzeugt werden und dadurch den entsprechenden Ionenaustauscher regenerieren, was einen kontinuierlichen Betrieb der Zelle ermöglicht und eine elektrochemische Regeneration der Harzbetten vom Eingang bis Ausgang der Harzkammern bewirkt. Die Regeneration und der stationäre Beladungszustand des Harzes kann bei der erfindungsgemäßen Zelle durch Variation der angelegten Stromdichte kontrolliert und geregelt werden. Weiterhin ist die erfindungsgemäße Zelle durch den vereinfachten Zellaufbau mit nur wenigen Zellräumen und nur wenigen Membranen sehr bedienungs- und wartungsfreundlich.

Ein weiterer Vorteil der erfindungsgemäßen Zelle besteht darin, daß durch die Entwicklung oxidativer Gase an den Anoden direkt im Hauptstrom des zu behandelnden Wassers eine mögliche Keimbildung im Harzbett und im Reinstwasser vermieden oder vermindert wird.

Ein weiterer Vorteil der erfindungsgemäßen Zelle besteht darin, daß durch Umsetzung von gelöstem Sauerstoff an den Kathoden Anionenaustauscherharze, insbesondere solche mit quarternären Trimethylammoniumgruppen gegen oxidativen Abbau geschützt werden. Der entstehende Wasserstoff an den Kathoden verstärkt diese Wirkung noch.

Die erfindungsgemäße elektrochemische Zelle kann weiterhin zu einer Mehrfachelektrolysezelle ausgebaut werden, indem mindestens zwei der Zellen derart nebeneinander angeordnet werden, daß gleichen Elektroden zugeordnete Elektrodenräume nebeneinander liegen und eine gemeinsame Elektrode besitzen oder daß unterschiedlichen Elektroden zugeordnete Elektrodenräume nebeneinander liegen und diese durch eine bipolare Membran oder eine bipolare Elektrode voneinander getrennt sind. Derart aufgebaute Mehrfachelektrolysezellen sind insbesondere von Vorteil für eine effektive Nutzung der Elektroden. Es kann allein durch Hinzufügen einer Elektrode und zweier Ionenaustauschermembranen die Kapazität der Zelle verdoppelt werden. Durch den Aufbau von Mehrfachelektrolysezellen wird ebenfalls die örtliche Stromdichte über die Kammerlänge konstanter gehalten. Weitere, vorteilhafte Ausgestaltungen sind Mehrfachelektrolysezellen, die aus einer beliebigen Kombination von Zellen mit Elektrodenräumen, die eine gemeinsame Elektrode besitzen, und solchen, die durch eine bipolare Membran oder eine bipolare Elektrode voneinander getrennt sind, bestehen.

Weiterhin können die erfindungsgemäßen Einfach- oder Mehrfachelektrolysezellen in beliebiger Kombination in Serie hintereinandergeschaltet werden. Derartige Schaltungen haben die vorteilhafte Wirkung, daß in den verschiedenen Zellen unterschiedliche Stromdichten angelegt werden können, so daß beide Zellen jeweils unter der Grenzstromdichte betrieben werden können. Dadurch ist eine verbesserte Stromausbeute des Systems gegeben.

Ein weiterer Vorteil von in Serie geschalteten Mehrfachelektrolysezellen besteht darin, daß zwischen den Zellen ein solcher räumlicher Abstand aufgebaut werden kann, daß die Teilentionisierung in einer Zentralstation und die Vollentionisierung zu Reinstwasser nahe am Endverbraucher durchgeführt wird.

Wenn zudem die Solezuführung im Hinblick auf die miteinander kombinierten Elektrolysezellen im Gegenstrom zu der durch Ionenaustausch zu behandelnden Lösung erfolgt, führt dies außerdem zu der vorteilhaften Wirkung, daß durch Verminderung der Rückdiffusion in der zweiten Elektrolysezelle die Reinstwasserqualität verbessert wird.

Vorzugsweise wird desweiteren die Solezuführung vom Zulauf für die durch Ionenaustausch zu behandelnde Lösung abgezweigt. Dies hat den Vorteil, daß der Solestrom nach dem Durchströmen der Soleräume wieder der zu behandelnden Lösung in einer Vorbehandlungsstufe zugeführt werden kann und damit die Entstehung von Soleabwasser vermieden wird.

Zusätzlich werden die den Solestrom führenden Soleräume der erfindungsgemäßen Zellen mit netzartigem Spacer und/oder mit Ionenaustaustauscherharz(en) gefüllt, wobei das Ionenaustauscherharz sowohl Anionenaustauscherals auch Kationenaustauscherharz oder auch ein Mischung von beiden sein kann. Durch die Harzfüllung wird die Ionenleitfähigkeit im Soleraum erhöht und dadurch die Gesamtzellspannung wesentlich vermindert. Nach Beendigung des Deionisationsprozesses kann der Solestrom dann in eine Vorbehandlungsstufe zurückgeführt werden, z.B. auf den Eingang einer vorgeschalteten Umkehrosmose, so daß letztendlich nur entionisiertes Medium entsteht und das Verhältnis von Reinstwasser zu Rohwasser verbessert wird.

Eine weitere vorteilhalfte Ausgestaltung der erfindungsgemäßen Zellen ist, daß die Membranen, die die Soleräume von den Elektrodenräumen trennen, Anionenaustauscher- und Kationenaustauschermembrane sind.

Ausführungsbeispiele der Erfindung sind in den Zeichnungen schematisch dargestellt und werden im folgenden näher erläutert:

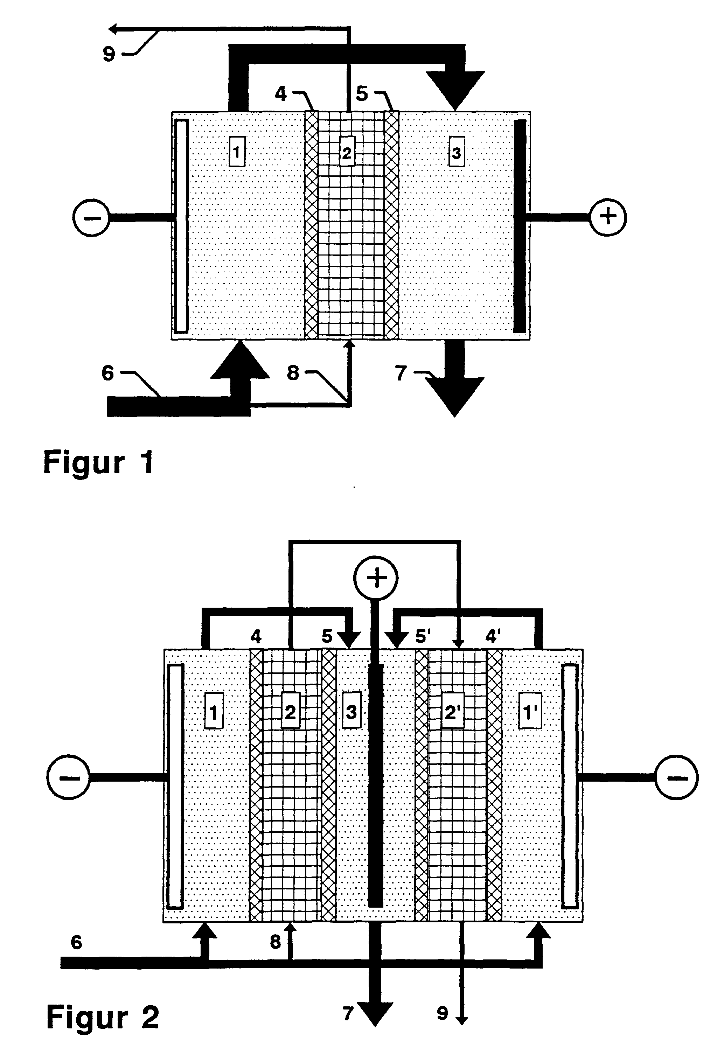

Figur 1 zeigt eine einfache elektrochemische Zelle, bei der der Kathodenraum 1 mit Anionenaustauscher und der Anodenraum 3 mit Kationenaustauscher gefüllt ist. An Kathodenraum 1 und Anodenraum 3 grenzt unmittelbar der Soleraum 2 an, der von den beiden Elektrodenräumen durch die Anionenaustauschermembran 4 und die Kationenaustauschermembran 5 getrennt ist. Über den Zulauf 6 wird die zu behandelnde Lösung zunächst durch den Kathodenraum 1 über den dort enthaltenden Anionenaustauscher und anschließend durch den Anodenraum 3 über den dort enthaltenden Kationenaustauscher geleitet. Das entionisierte Medium wird schließlich über den Ablauf 7 abgeführt. Vom Zulauf 6 des Hauptstroms zweigt die Solezuführung 8 ab, über die der Solestrom durch den Soleraum 2 geleitet wird. Dort nimmt der Solestrom die durch die Membranen 4 und 5 durchtretenden Anionen bzw. Kationen auf, die anschließend mit dem Solestrom über die Ableitung 9 abgeführt werden.

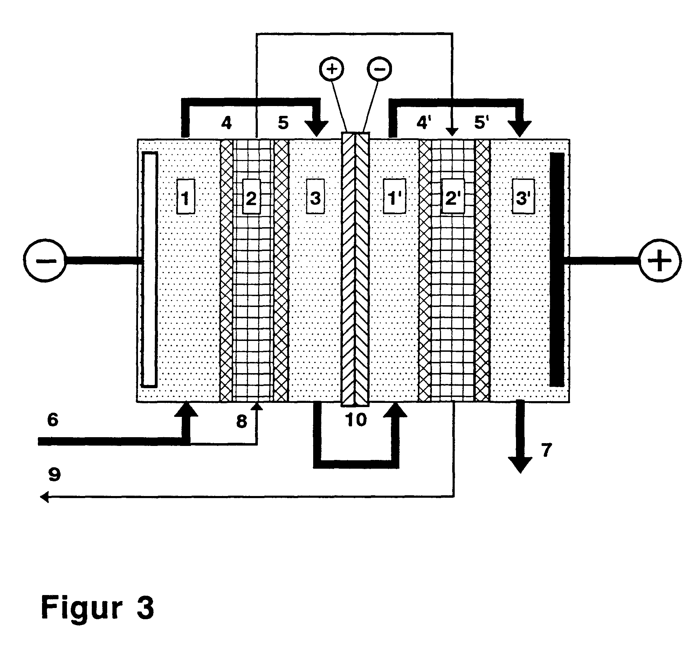

In Figur 2 sind 2 Zellen der in Figur 1 gezeigten Zelle so nebeneinander angeordnet, daß zwei Anodenräume nebeneinander liegen und eine gemeinsame Anode besitzen. Der dadurch entstandene Anodenraum 3 wird von den beiden Kathodenräumen 1,1' durch die beiden Soleräume 2,2' getrennt, wobei die Räume untereinander wiederum durch die Anionenaustauschermembranen 4, 4' und die Kationenaustauschermembranen 5, 5' abgegrenzt werden. Weiterhin ist beispielhaft skizziert, wie Haupt- und Solestrom durch eine solche Mehrfachelektrolysezelle geleitet werden können: Im dargestellten Fall wird über den Zulauf 6 die zu behandelnde Lösung im Gleichstrom zunächst durch beide Kathodenräume 1, 1' geleitet. Beide Teilströme werden anschließend wieder zu einem Hauptstrom zusammengeführt, der im Anodenraum 3 weiter deionisiert und schließlich über den Ablauf 7 abgeleitet wird. Der vom Zulauf 6 des Hauptstroms über die Zuführung 8 abgezweigte Solestrom wird zunächst durch den Soleraum 2 und anschließend durch den Soleraum 2' geleitet, so daß der Durchfluß dieses Stromes im Hinblick auf den Hauptstrom sowohl im Gleich- als auch im Gegenstrom erfolgt.

Die in Figur 2 gezeigte Mehrfachelektrolysezelle kann je nach Bedarf weiter ausgebaut werden, indem eine oder mehrere der in Figur 1 dargestellten Zelle so zugefügt werden, daß weitere, gleichen Elektroden zugeordnete Elektrodenräume nebeneinander liegen und eine gemeinsame Elektrode besitzen, so daß Kathoden- und Anodenraum in alternierender Weise aufeinanderfolgen und jeweils durch Soleräume voneinander getrennt werden.

Die in Figur 3 dargestellte Mehrfachelektrolysezelle unterscheidet sich von der in Figur 2 gezeigten Zelle insofern, als dort zwei Zellen gemäß Figur 1 so nebeneinander angeordnet sind, daß an den Anodenraum 3 direkt der Kathodenraum 1' der angefügten Zelle anschließt, wobei beide Räume durch eine bipolare Membran 10 oder eine bipolare Elektrode 10 voneinander abgegrenzt sind. Auch in dieser Zeichnung ist beispielhaft der Durchfluß von Haupt- und Solestrom durch die einzelnen Räume der Zelle skizziert: Im hier dargestellten Fall erfolgt die Leitung der Ströme durch die Kammern der Zelle in alternierender Weise.

Auch die in Figur 3 dargestellte Mehrfachelektrolysezelle kann weiter ausgebaut werden, indem ein oder mehrere weitere Zellen gemäß Figur 1 in entsprechender Weise zugefügt werden.

Desweiteren können Zellen gemäß Figur 1 sowohl nach dem in Figur 2 als auch in Figur 3 dargestellten Prinzip aneinandergefügt werden, so daß Mehrfachelektrolysezellen entstehen, in denen sowohl gleichen Elektroden zugeordnete Elektrodenräume mit gemeinsamer Elektrode als auch unterschiedlichen Elektroden zugeordnete Elektrodenräume, die durch ein bipolares Element voneinander getrennt sind, nebeneinander liegen.

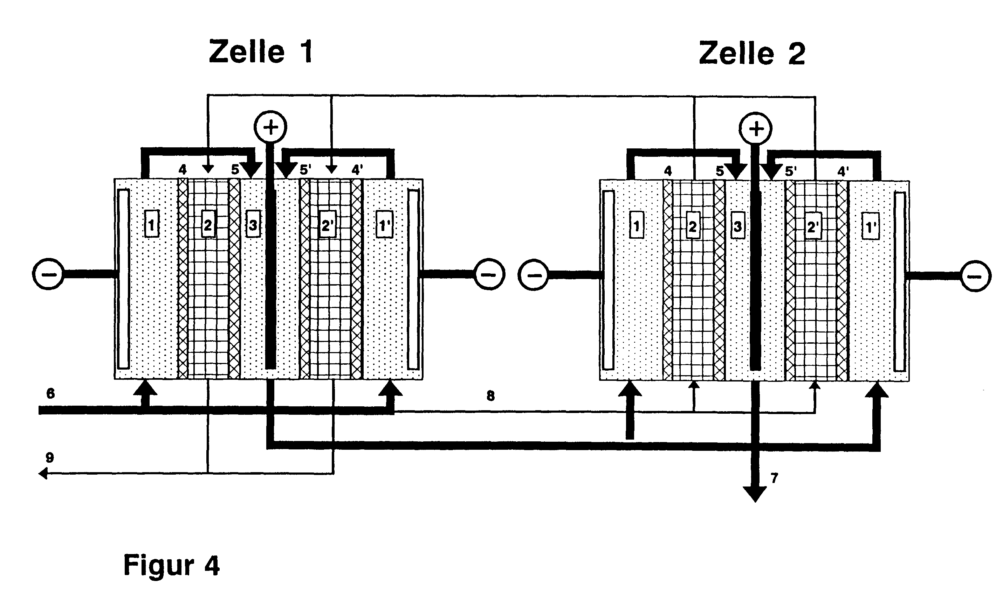

In Figur 4 sind 2 der in Figur 2 dargestellten Zellen hintereinander geschaltet. Dabei wird der Hauptstrom der zu behandelnden Lösung zunächst durch die Zelle I wie bereits in Figur 2 dargestellt und oben beschrieben geleitet. Nach Deionisierung des Mediums im Anodenraum 3 wird der Strom zur Zelle II geleitet und durchströmt diese in gleicher Weise wie Zelle I. Die Solezuführung erfolgt dagegen im Hinblick auf die beiden miteinander kombinierten Zellen im Gegenstrom zum Hauptstrom, d.h. der vom Hauptstrom abgezweigte Solestrom wird zunächst zur Zelle II geleitet. Dort durchströmt der Solestrom die beiden Soleräume 2 und 2' im Gleichstrom, wird danach der Zelle I zugeleitet und durchströmt dort ebenfalls die beiden Soleräume im Gleichstrom. Bei einer konkreten Ausführung gemäß Figur 4 betrug der Hauptstrom 6 durch die Zellen I und II 130 l/h. Die Leitfähigkeit am Eingang betrug etwa 30 µs/cm, am Ausgang der Zelle I 0,8 - 0,5 µs/cm und am Ausgang 7 der Zelle II 0,055 µs/cm (25°C). Der Solestrom 8 betrug etwa 10 l/h mit einer Leitfähigkeit von ca. 150 µs/cm. Dieser Teilstrom kann über eine vorgeschaltete UO-Anlage wieder in den Prozess zurückgeführt werden. Die an die Zellen I und II angelegten elektrischen Ströme betrugen 5 und 1 Ampere bei Harzvolumina von 0,8 1 für Anionen- und Kationenharz pro Zelle.

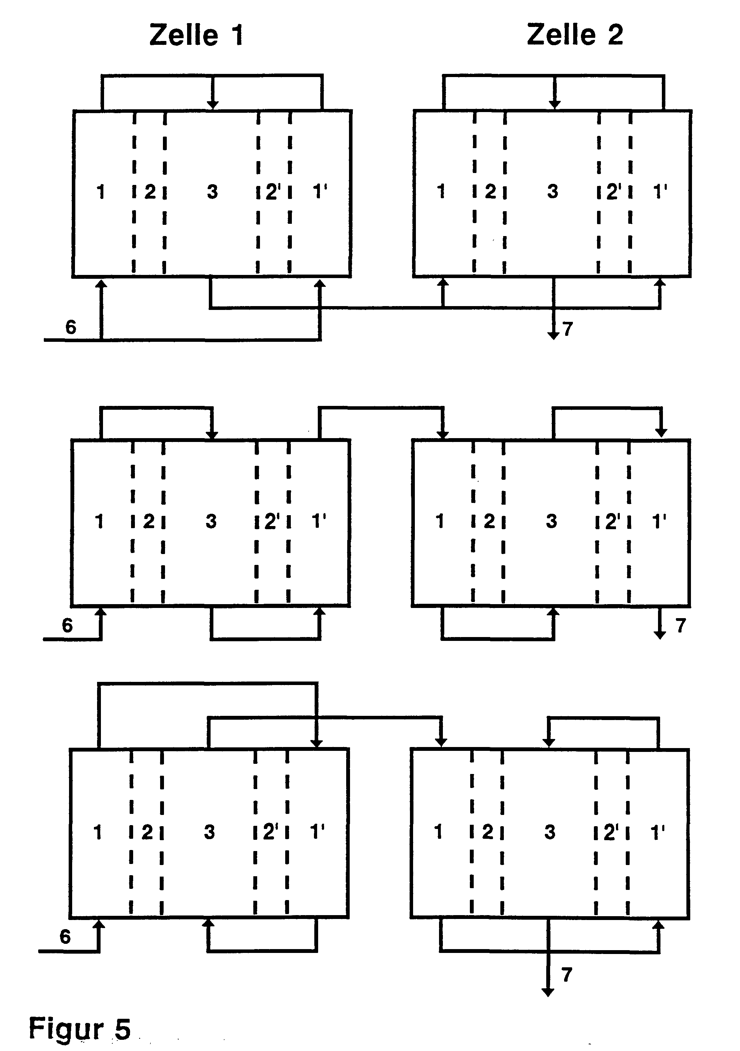

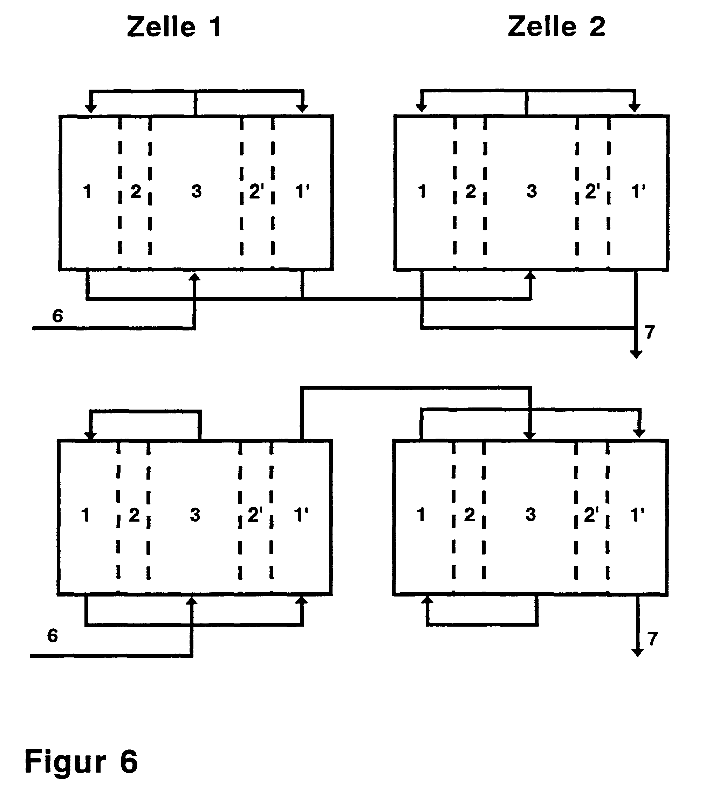

In den Figuren 5 und 6 sind weitere Möglichkeiten der Hauptströmungsführung durch hintereinandergeschaltete Zellen dargestellt, wobei der Hauptstrom gemäß Figur 5 über den Kathodenraum und gemäß Figur 6 über den Anodenraum zugeleitet wird. Selbstverständlich sind die dargestellten Hauptströmungsführungen durch die hintereinandergeschalteten Zellen in beliebiger Weise kombinierbar.

## Patentansprüche

1. Elektrochemische Zelle zur Entionisierung von wäßrigen Lösungen durch Ionenaustausch, ausgestattet mit Zu- (6) und Abläufen (7) für die durch Ionenaustausch zu behandelnde Lösung sowie mit einer Solestromzuführung (8) und -ableitung (9), ferner ausgestattet mit Ionenaustauscher und mit Elektroden, an die sich nach innen die Elektrodenräume, Kathoden- und Anodenraum (1,3), anschließen, zwischen denen sich, durch Membranen (4,5) getrennt, ein Soleraum (2) befindet, wobei
der Soleraum (2) unmittelbar an die Elektrodenräume (1, 3) angrenzt und die Elektrodenräume mit Ionenaustauschermaterial gefüllt sind, wobei der Kathodenraum (1) Anionenaustauscher und der Anodenraum (3) Kationenaustauscher enthält und sich die Elektroden in direktem Kontakt mit den Anionen- und Kationenaustauscherharzbetten befinden, und daß der Kathodenraum (1) und der Anodenraum (2) an der dem Zulauf (6) und dem Ablauf (7) entgegengesetzten Seite durch eine Leitung in Verbindung steht.

2. Elektrochemische Zelle, bestehend aus mindestens 2 Zellen gemäß Anspruch 1, die nebeneinander derart angeordnet sind, daß gleichen Elektroden zugeordnete Elektrodenräume nebeneinander liegen und eine gemeinsame Elektrode besitzen.

3. Elektrochemische Zelle, bestehend aus mindestens 2 Zellen gemäß Anspruch 1, die nebeneinander derart angeordnet sind, daß unterschiedlichen Elektroden zugeordnete Elektrodenräume nebeneinander liegen und diese durch eine bipolare Membran (10) oder eine bipolare Elektrode (10) voneinander getrennt sind.

4. Elektrochemische Zelle, bestehend aus einer beliebigen Kombination von Zellen gemäß Anspruch 2 und 3.

5. Elektrochemische Zelle bestehend aus mindestens 2, in beliebiger Kombination in Serie hintereinander geschalteter elektrochemischer Zellen nach einem der vorhergehenden Ansprüche.

6. Elektrochemische Zelle nach Anspruch 5, die so geschaltet sind, daß die Solezuführung (8) im Hinblick auf die miteinander kombinierten Elektrolysezellen im Gegenstrom zu der durch Ionenaustausch zu behandelnden Lösung erfolgt.

7. Elektrochemische Zelle nach einem der vorhergehenden Ansprüche,
**dadurch gekennzeichnet,**
daß die Solezuführung (8) vom Zulauf für die durch Ionenaustausch zu behandelnde Lösung (6) abzweigt.

8. Elektrochemische Zelle nach einem der vorhergehenden Ansprüche,
**dadurch gekennzeichnet,**
daß die den Solestrom führenden Soleräume (2) mit netzartigem Spacer und/oder mit Ionenaustauscherharz gefüllt sind.

9. Elektrochemische Zelle nach Anspruch 8,
**dadurch gekennzeichnet,**
daß das Ionenaustauscherharz Anionenaustauscher-oder Kationenaustauscherharz oder eine Mischung von beiden ist.

10. Elektrochemische Zelle nach einem der vorhergehenden Ansprüche,
**dadurch gekennzeichnet,**
daß die die Soleräume (2) von den Elektrodenräumen (1, 3) trennenden Membrane (4, 5) Anionenaustauschermembrane (4) und Kationenaustauschermembrane (5) sind.

## Claims

1. An electrochemical cell for deionising aqueous solutions by ion exchange, equipped with inlets (6) and outlets (7) for the solution to be treated by ion exchange, and equipped with a brine stream inlet line (8) and outlet line (9), and additionally equipped with ion exchangers and with electrodes which inwardly adjoin the electrode compartments, namely the cathode compartment and the anode compartment (1, 3), between which, separated by membranes (4, 5) there is a brine compartment (20), wherein the brine compartment (2) directly adjoins the electrode compartments (1, 3) and the electrode compartments are filled with ion exchange material, wherein the cathode compartment (1) contains an anion exchanger and the anode compartment (3) contains a cation exchanger, and the electrodes are in direct contact with the beds of anion and cation exchange resin, and the cathode compartment (1) and the anode compartment (2) are connected by a line on their opposite side to the inlet (6) and the outlet (7).

2. An electrochemical cell consisting of at least 2 cells according to claim 1 which are disposed side by side so that electrode compartments associated with identical electrodes are situated side by side and have a common electrode.

3. An electrochemical cell consisting of at least 2 cells according to claim 1 which are disposed side by side so that electrode compartments associated with different electrodes are situated side by side and are separated from each other by a bipolar membrane (10) or by a bipolar electrode (10).

4. An electrochemical cell consisting of an arbitrary combination of cells according to claims 2 and 3.

5. An electrochemical cell consisting of at least 2 electrochemical cells according to any one of the preceding claims, connected in any combination in series.

6. An electrochemical cell according to claim 5, which is connected so that, with regard to the electrolysis cells which are combined with each other, the brine feed (8) is effected counter-current to the solution to be treated by ion exchange.

7. An electrochemical cell according to any one of the preceding claims,
characterised in that
the brine inlet (8) branches off from the inlet for the solution (6) to be treated by ion exchange.

8. An electrochemical cell according to any one of the preceding claims,
characterised in that
the brine compartments (2) which carry the brine stream are filled with a mesh-like spacers and/or with ion exchange resin.

9. An electrochemical cell according to claim 8,
characterised in that the ion exchange resin is an anion exchange resin or a cation exchange resin or a mixture of the two.

10. An electrochemical cell according to any one of the preceding claims,
characterised in that
the membranes (4, 5) which separate the brine compartments (2) from the electrode compartments (1, 3) are anion exchange membranes (4) and cation exchange membranes (5).

## Revendications

1. Cellule électrochimique pour la désionisation de solutions aqueuses par échange d'ions, pourvue de conduites d'amenée (6) et d'évacuation (7) pour la solution à traiter par échange d'ions, ainsi que d'une conduite d'amenée (8) et d'une conduite d'évacuation (9) d'eau salée, pourvue, en outre, d'échangeurs d'ions et d'électrodes qui sont suivies vers l'intérieur par des espaces d'électrodes, l'espace cathodique et l'espace anodique (1, 3), entre lesquels est situé un espace d'eau salée (2), séparé de ceux-ci par des membranes (4, 5), dans laquelle
l'espace d'eau salée (2) est directement contigu aux espaces d'électrodes (1, 3), et les espaces d'électrodes sont garnis d'une matière échangeuse d'ions, l'espace cathodique (1) contenant un échangeur d'anions et l'espace anodique (3) contenant un échangeur de cations, et les électrodes étant directement au contact des lits de résine échangeuse d'anions et de résine échangeuse de cations, et l'espace cathodique (1) et l'espace anodique (2) étant reliés par une conduite du côté opposé à la conduite d'amenée (6) et à la conduite d'évacuation (7).

2. Cellule électrochimique formée d'au moins 2 cellules selon la revendication 1, qui sont disposées côte à côte d'une manière telle que des espaces d'électrodes associés à des électrodes identiques sont disposés côte à côte et possèdent une électrode commune.

3. Cellule électrochimique formée d'au moins 2 cellules selon la revendication 1, qui sont disposées côte à côte d'une manière telle que des espaces d'électrodes associés à des électrodes différentes sont disposés côte à côte et sont séparés entre eux par une membrane bipolaire (10) ou par une électrode bipolaire (10).

4. Cellule électrochimique formée d'une combinaison quelconque de cellules selon les revendications 2 et 3.

5. Cellule électrochimique formée d'au moins 2 cellules électrochimiques selon l'une des revendications précédentes, montées en série selon une combinaison quelconque.

6. Cellule électrochimique selon la revendication 5, qui est montée en série d'une manière telle que l'amenée d'eau salée (8), par rapport aux cellules électrolytiques combinées ensemble, se fait à contre-courant par rapport à la solution à traiter par échange d'ions.

7. Cellule électrochimique selon l'une des revendications précédentes, caractérisée en ce que l'amenée d'eau salée (8) est déviée par rapport à l'amenée de solution (6) à traiter par échange d'ions.

8. Cellule électrochimique selon l'une des revendications précédentes, caractérisée en ce que les espaces d'eau salée (2) amenant le flux d'eau salée sont garnis d'éléments d'espacement en forme de réseau et/ou d'une résine échangeuse d'ions.

9. Cellule électrochimique selon la revendication 8, caractérisée en ce que la résine échangeuse d'ions est une résine échangeuse d'anions ou une résine échangeuse de cations ou un mélange des deux.

10. Cellule électrochimique selon l'une des revendications précédentes, caractérisée en ce que les membranes (4, 5) qui séparent les espaces d'eau salée (2) des espaces d'électrodes (1, 3) sont une membrane échangeuse d'anions (4) et une membrane échangeuse de cations (5).
